# EUROPEAN PATENT APPLICATION

(11) **EP 4 711 101 A1**
(43) Date of publication of application: **18.03.2026**
(21) Application number: 25183626.8
(22) Date of filing: 18.06.2025
(51) Int. Cl.: B25J 15/00, B25J 15/02, B25J 15/10

(54) **GRIPPER SYSTEM, GRIPPER UNIT AND ROBOT FOR HANDLING OBJECTS**

(30) Priority: 13.09.2024 IN 202411069292
(71) Applicant: Delta Electronics India Private Limited, 122201 Gurugram, Haryana (IN)
(72) Inventor: Raushan, Rakesh Kumar, 122201 Gurugram, Haryana (IN)
(74) Representative: Uexküll & Stolberg

(57) **Abstract**

The present invention discloses a gripper system (200) for handling objects (260) comprising a first gripper assembly (220) perpendicular to second gripper assembly (230) combinedly mounted on a shaft (208) circumscribed within a gear box (205) coupled with a servomotor (204). A gripper unit (235) is mounted on each of said first and second gripper assemblies (220, 230). A controller (350) is in communication with the gripper unit (235) configured for synchronized translation and varying rotational degrees of freedom of the first and second gripper assemblies (220, 230) for handling of the objects (260) located at plurality of spaces having pre-defined angles and orientations along orthogonal planes.

## Description

### FIELD OF THE INVENTION

The present disclosure relates to a robotic device, and more particularly to a gripper system, a gripper unit and a robot for handling objects.

### BACKGROUND OF THE INVENTION

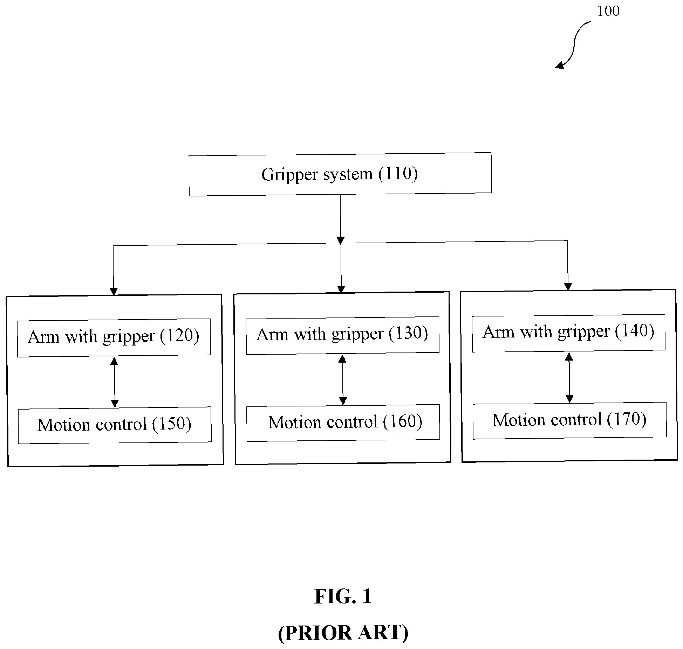

Robots with gripper systems are generally known to pick and place objects. FIG. 1 illustrates block diagram (100) of such robot with conventional gripper system (110). Conventional gripper systems (110) are complex and require multiple motion control systems (150, 160, 170), each dedicated to handle rotation and translation of individual arms for a specific task separately. Thus, such conventional gripper systems (110) have significant limitations. Firstly, multiple motion control systems (150, 160, 170) and multiple arms with individual grippers (120, 130, 140) for each specific task increase associated cost of the system significantly and occupy large operational space. Such systems cause delays in overall production as movement of the multiple arms and control systems actuations increase time. Secondly, each gripper system (110) may require specialized clamping devices and include limitations of moving elements and stationary elements. Each gripper system (110) is limited to having a restricted freedom of rotation, resulting in failure to handle different objects securely. The conventional gripper system (110) fails to handle soft materials with significant variable thickness of the objects.

Therefore, there exists a need to provide a gripper system, gripper unit and a robot that overcomes one or more of the aforementioned problems and handles the objects securely in various degrees of freedom of rotation.

### SUMMARY OF THE INVENTION

An object of the present disclosure is to provide a gripper system, gripper unit and a robot for handling the objects securely in various degrees of freedom of rotation.

Accordingly, an exemplary aspect of the present invention discloses a gripper system for handling objects, said gripper system comprises a servo motor coupled with a gear box; a shaft circumscribed within the gear box, extending along a central rotational shaft axis; a first gripper assembly mounted on said shaft along said central rotational shaft axis; a second gripper assembly mounted on said shaft perpendicular to said first gripper assembly along said central rotational shaft axis; a gripper unit gripper unit having two first gripper fingers and a single second gripper finger for gripping the object; and a controller in communication with the gripper unit, configured for synchronized translation and varying rotational degrees of freedom of the first and second gripper assemblies for handling of the objects located at plurality of spaces having pre-defined angles and orientations along orthogonal planes.

According to another aspect, the present invention discloses a gripper unit for gripping objects, said gripper unit comprises two first gripper fingers spaced apart to each other and coupled to a first side of a gripper assembly; and a single second gripper finger coupled to a second side of said gripper assembly, said second gripper finger is centrally aligned within a gap between the spaced apart first gripper fingers for gripping, thereby handling of the objects located at plurality of spaces having pre-defined angles and orientations along orthogonal planes.

According to still another aspect, the present invention discloses a robot for handling objects, said robot comprises a gripper system for handling of the objects located at plurality of spaces having pre-defined angles and orientations along orthogonal planes.

The beneficial effect of the present disclosure is that the embodiments of the present invention provide a gripper system, gripper unit and a robot, which aids in reduction of motion of the robot and the robot arm, thereby effectively saving operational process time and reducing the associated power and maintenance costs. The gripper system and the robot therefore also have an economic significance with a high level of reliability in terms of electrical controls and communication.

### BRIEF DESCRIPTION OF THE DRAWINGS

The above and other aspects, features, and advantages of certain exemplary embodiments of the present invention will be more apparent from the following description taken in conjunction with the accompanying drawings in which:
FIG. 1 illustrates a block diagram representing conventional robot gripper system for handling objects;
FIG. 2 illustrates an exploded isometric view of a gripper system for handling objects, according to an exemplary aspect of the present invention;
FIG. 3 illustrates an isometric view of the gripper system assembled having fingers coupled to a plurality of gripper assemblies in an open position, according to an exemplary embodiment of the present invention;
FIG. 4 illustrates an isometric view of the gripper system assembled having the fingers coupled to the plurality of gripper assemblies in a closed position for handling the objects, according to the exemplary embodiment of the present invention;
FIG. 5 illustrates a gripper unit showing a detailed side view of the fingers coupled to the plurality of gripper assemblies representing open and closed positions, according to another exemplary aspect of the present invention;
FIG. 6 illustrates a block diagram illustrating details angles of rotation of the plurality of gripper assemblies while handling the objects, according to the exemplary embodiment of the present invention;
FIG. 7 illustrates a schematic representation of axes of rotation of the plurality of gripper assemblies intersecting at a common point, 'C' along an axis of the gripper system, according to the exemplary embodiment of the present invention;
FIG. 8 illustrates a side view of a robot with the gripper system, according to still another exemplary aspect of the present invention;
FIG. 9 illustrates a side view of the robot with various angle of rotation of a first gripper assembly, according to the exemplary embodiment of the present invention;
FIG. 10 illustrates a front view of the robot with various angle of rotation of a second gripper assembly, according to the exemplary embodiment of the present invention;
FIG. 11 illustrates a top view of the robot with various angle of rotation of first and second gripper assemblies, according to the exemplary embodiment of the present invention;
FIG. 12 illustrates a block diagram representing a servo control of the gripper assemblies and robot, according to the exemplary embodiment of the present invention; and
FIG. 13 illustrates a method of controlling a gripper system for handling objects, according to the exemplary embodiment of the present invention.

Persons skilled in the art will appreciate that elements in the figures are illustrated for simplicity and clarity and may have not been drawn to scale. For example, the dimensions of some of the elements in the figures may be exaggerated relative to the other elements to help to improve understanding of various exemplary embodiments of the present disclosure. Throughout the drawings, it should be noted that reference signs are used to depict the same or similar elements, features, and structures.

### DETAILED DESCRIPTION OF THE PREFERRED EMBODIMENT

While this invention is susceptible of embodiments in many different forms, there is shown in the drawings and will herein be described in detail, a preferred embodiment of the invention with the understanding that the present disclosure is to be considered as an exemplification of the principles of the invention and is not intended to limit the broad aspects of the invention to the embodiment illustrated. Other aspects, advantages, and salient features of the invention will become apparent to those skilled in the art from the following detailed description, which, taken in conjunction with the annexed drawings, discloses exemplary embodiments of the invention. Embodiments of the present disclosure will now be described with reference to the accompanying drawings. Embodiments are provided to convey the scope of the present disclosure thoroughly and fully to a person skilled in the art. Numerous details are set forth relating to specific components to provide a complete understanding of embodiments of the present disclosure. It will be apparent to the person skilled in the art that the details provided in the embodiments should not be construed to limit the scope of the present disclosure. In some embodiments, well-known processes, well-known apparatus structures, and well-known techniques are not described in detail.

In general, the present invention discloses a gripper system for handling objects comprising a first gripper assembly perpendicular to second gripper assembly combinedly mounted on a shaft circumscribed within a gear box coupled with a servo motor. A gripper unit is mounted on each of said first and second gripper assemblies. A controller is in communication with the gripper unit configured for synchronized translation and varying rotational degrees of freedom of the first and second gripper assemblies for handling of the objects located at plurality of spaces having pre-defined angles and orientations along orthogonal planes.

In an exemplary implementation of the present invention, a gripper unit has two first gripper fingers that are spaced apart from each other and are coupled to a first side of a gripper assembly. The gripper unit further includes a single second gripper finger that is coupled to a second side of said gripper assembly. In said exemplary implementation, the first and second gripper fingers may include air nozzles that aid in creating friction for holding the objects securely. The first and second gripper fingers with air nozzles are connected to a pneumatic device and a plurality of solenoid valves that are in communication with a controller coupled with a gripper system. Thus, the gripper unit may be coupled with the gripper system for efficient gripping and handling of objects located at plurality of spaces having pre-defined angles and orientations along orthogonal planes. Further, in said exemplary implementation, the gripper system may comprise a first gripper assembly and a second gripper assembly perpendicular to the first gripper assembly. The first and second gripper assemblies are combinedly mounted on a shaft and coupled with a servo motor and a gear box for regulating speed of translation of the first and second gripper assemblies with varying rotational degrees of freedom.

According to an exemplary embodiment, the objects disclosed in the present invention include but are not limited to banknotes among others. The electrical connections, processors, command controls, which are commonly known in servo motion motors are employed herein the present invention and the description of the same which is generally known in the art is omitted.

With the teachings of the present invention, when compared with conventional gripper systems, there is reduction of unnecessary motion of the gripper system. Furthermore, according to the exemplary implementation, the gripper system of the present invention may be coupled to a robot that has a robot arm with a freedom of movement in at least a self-rotation axis, or a self-extension axis, or a two-joint arm movement or a combination thereof. Thus, the gripper system of the present invention aids in reduction of motion of the robot and the robot arm, thereby effectively saving operational process time and reducing the associated power and maintenance costs. The gripper system and the robot therefore also have an economic significance with a high level of reliability in terms of electrical controls and communication.

The terminology used in the present disclosure is only for the purpose of explaining a particular embodiment and such terminology shall not be considered to limit the scope of the present disclosure. The use of the expression "at least" or "at least one" suggests the use of one or more elements or ingredients or quantities, as the use may be in the embodiment of the disclosure to achieve one or more of the desired objects or results. As used in the present disclosure, the forms "a," "an," and "the" may be intended to include the plural forms as well, unless the context clearly suggests otherwise. The terms "comprises," "comprising," "including," and "having," are open ended transitional phrases and therefore specify the presence of stated elements, units and/or components, but do not forbid the presence or addition of one or more other elements, components, and/or groups thereof.

The terms and words used in the following description and claims are not limited to the bibliographical meanings but are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents. Accordingly, it should be apparent to those skilled in the art that the following description of gripper system, a gripper unit and a robot for handling objects referred in the description for the purpose of the understanding and nowhere limit the invention. The skilled person will be able to devise various structures and shapes of the gripper system, gripper unit, robot, electrical connections, communications, that, although not explicitly described herein, embody the principles of the present invention. All the terms and expressions in the description are only for the purpose of understanding and nowhere limit the invention. Terms like plurality, first, second, third, larger, and smaller, angle, degrees of freedom are used to differentiate between objects having the same terminology and are in no way intended to represent a chronological order, unless where explicitly stated otherwise. Moreover, all statements herein reciting principles, aspects, and embodiments of the invention, as well as specific examples thereof, are intended to encompass equivalents thereof. Thus, while structure of the gripper system with desired configuration, shape, diameters, angles, inclination, mounting surfaces, mounting structures, manufacturing processes, angles, degrees, dimensions, have been disclosed, nowhere limit the invention, and are provided for understanding of the invention. It will be appreciated those of ordinary skill in the art that various changes and modifications of the embodiments manufactured with other design parameters and configurations as well and are not limited to those described herein above may be as per operational requirements by making necessary changes without departing from the scope of the invention.

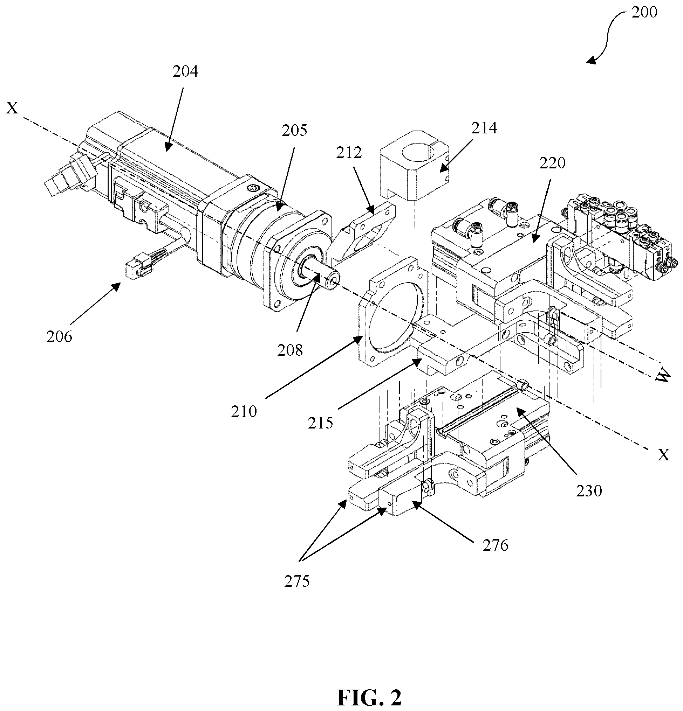

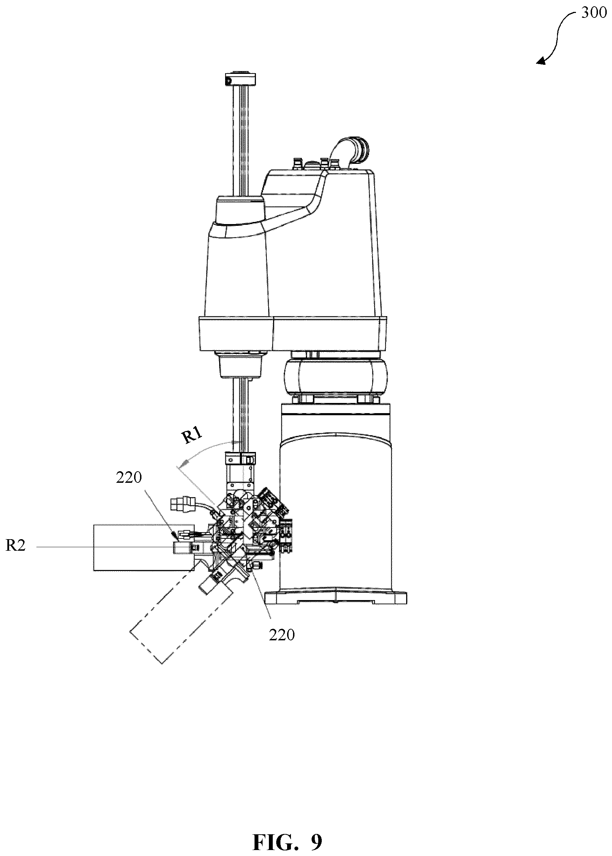

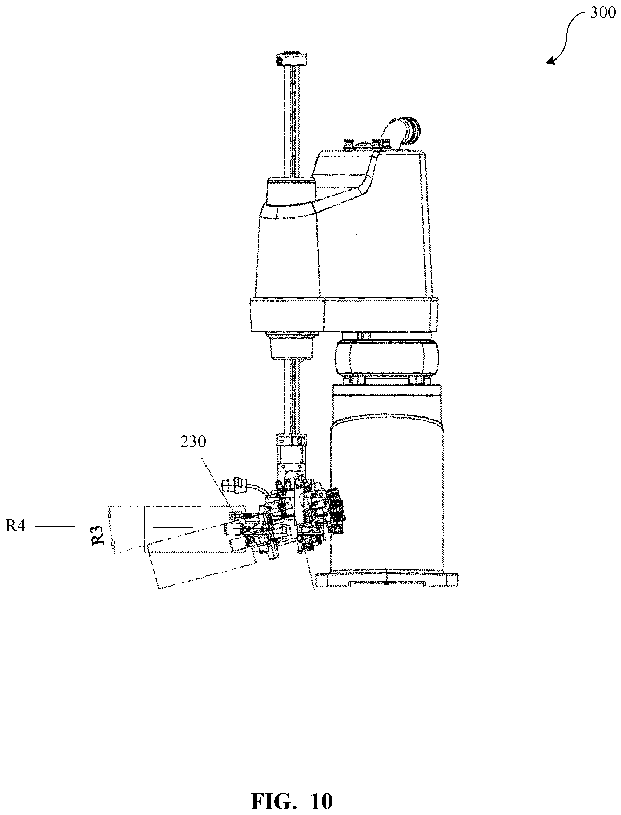

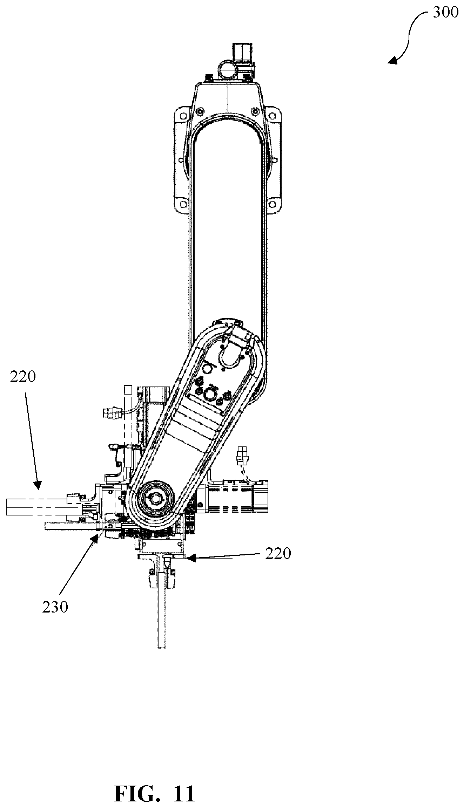

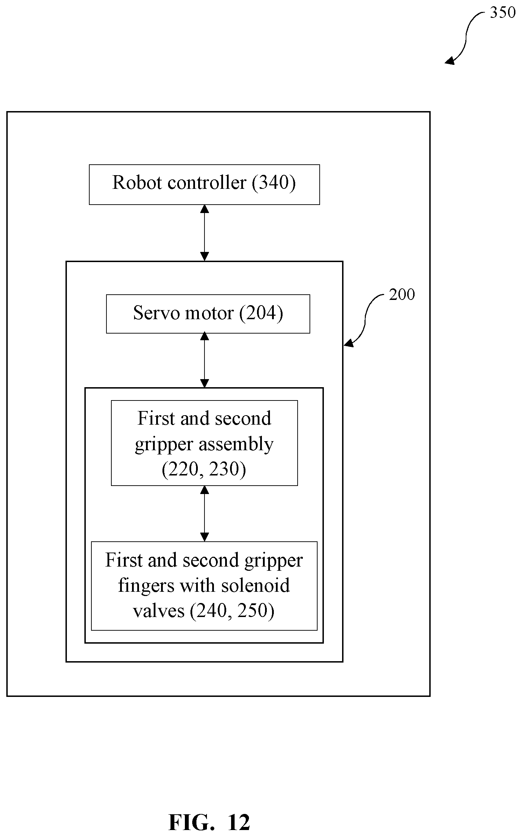

FIG. 2 to FIG. 13 illustrate a gripper system (200), a servo motor (204), a gear box (205), a brake unit (206), a shaft (208), a gear box retainer (210), an extension block (212), a shaft holder (214), a gripper assembly holder (215), a first gripper assembly (220), a second gripper assembly (230), a gripper unit (235), a first gripper fingers (240), a second gripper finger (250), an object (260), a plurality of solenoid valves (270), a base aligner (280), a central shaft axis (X-X), a rotational angle (r) of first and second gripper fingers (240, 250), a first rotational angle of inclination (R1) of first gripper assembly (220) at a starting initial position (IP1), a second rotational angle of inclination (R2) of first gripper assembly (220) at an end position (EP1), a first rotational angle of inclination (R3) of the second gripper assembly (230) at a starting initial position (IP2), a second rotational angle of inclination (R4) of the second gripper assembly (220) at an end position (EP2), axes (X, X1, and Z) of first gripper assembly (220), axes (Y, Y1, Y2) of second gripper assembly (230), point (c) on central shaft axis (X-X), robot (300), a robot arm (310), a robot shaft (320), a robot base (330), a robot controller (340), a servo control system (350), and a method (400).

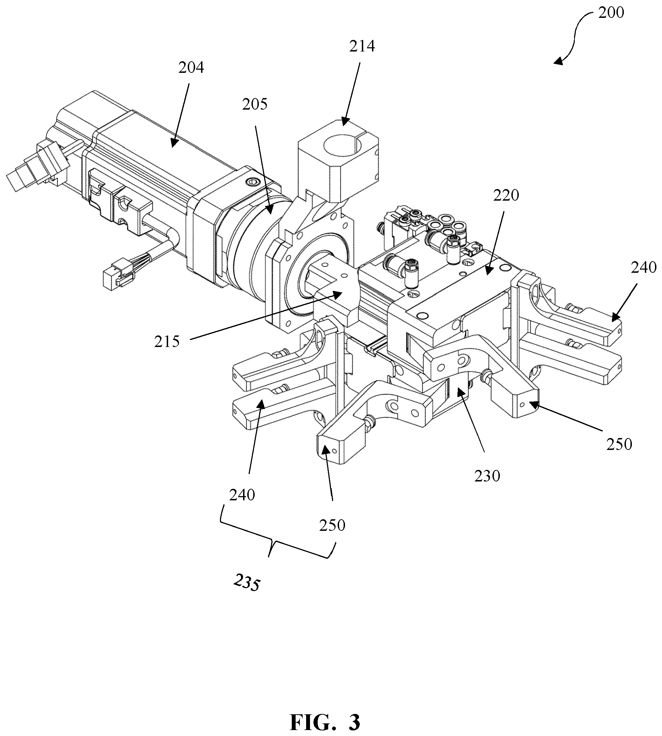

The gripper system (200), the gripper unit (235) and the robot (300) shall now be described in detail herein. Referring FIG. 2, according to an exemplary first aspect of the present invention, illustrates a gripper system (200) having a dual / plurality of gripper assemblies (220, 230) coupled with a single servo motor (204) for efficient and precise handling of objects. As seen in FIG. 2, the servo motor (204) is directly coupled with a gear box (205). A shaft (208) is configured to be circumscribed within the gear box (205) and extends along a central rotational shaft axis (X-X). Referring FIG. 3, the gripper system (200) also comprises a gripper unit (235) having fingers (240, 250) for gripping the object. The gripper unit (235) may be mounted on each of said first and second gripper assemblies (220, 230). According to the first aspect, the gripper system (200) with the gripper unit (235) may be in communication with a controller (350) configured for synchronized translation and varying rotational degrees of freedom of the first and second gripper assemblies (220, 230) for handling of the objects (260) located at plurality of spaces having pre-defined angles and orientations along orthogonal planes (X, Y, Z).

According to a second exemplary aspect, the present invention discloses a robot (300) having a robot arm (310). The gripper system (200) is coupled with the robot arm (310). The robot arm (310) has freedom of movement in at least a self-rotation axis, or a self-extension axis, or a two-joint arm movement or a combination thereof. The robot (300) is coupled with an integrated servo control system in communication with the gripper system (200) and the robot arm (310). The gripper system (200) may also include an extending block (212) mounted on the shaft (204). The extending block (212) may be coupled with a robot shaft holder (214) for establishing connection with a robot arm (310).

According to still another exemplary aspect, the present invention discloses a gripper unit (235) for gripping objects (260). The gripper unit comprises two first gripper fingers (240) that are spaced apart from each other and are coupled to a first side of a gripper assembly (220, 230). The gripper unit (235) further comprises a single second gripper finger (250) coupled to a second side of said gripper assembly (220, 230). The second gripper finger (250) may be centrally aligned within a gap between the spaced apart first gripper fingers (240) for gripping, thereby handling of the objects (260) located at plurality of spaces having pre-defined angles and orientations along orthogonal planes (X, Y, Z).

Hereinafter, embodiments of the invention will be described in detail by the use of the drawings. The following embodiments are not intended to unreasonably limit the contents of the invention. Additionally, all configurations which will be described below are not necessarily essential constituent elements of the invention, unless explicitly stated.

Referring FIG. 2 according to an exemplary embodiment of the present invention illustrates the gripper system (200). The gearbox (205) coupled with the servomotor (204) may be retained with the aid of a gear box retainer (210). The servomotor (204) of the present invention is a precise drive having feedback of torque, speed and position. Control driven through servomotor (204) is used to change the angle of gripper assemblies (220, 230) very accurately as per requirement for picking and placing of objects. Now, according to the exemplary embodiment, the first and second gripper assemblies (220, 230) may be combinedly coupled and held via a gripper retainer / gripper assembly holder (215). The gripper retainer / gripper assembly holder (215) may then be directly mounted on the rotating shaft (208) such that the gripper assemblies (220, 230) now in turn are configured to rotate along the common central shaft rotation axis (X-X) in accordance with synchronized translation and varying rotational degrees of freedom achieved via the servomotor (204) and the gear box (205). In the embodiment, the gripper assemblies (220, 230) may be mutually perpendicular to each other along the central shaft axis (X-X) and are configured to have angle of rotational degrees of freedom in at least two different planes (X, Y, Z) with minimum movement to save time in overall production. Alternatively, according to the embodiment, the gripper system may also include a break unit (206) in communication with servomotor (204) and the gear box (208) to stop the operation of the gripper assemblies (220, 230).

Referring FIG. 3 according to the exemplary embodiment of the present invention illustrates the gripper system (200) with a gripper unit (235). The gripper unit (235) of gripper system (200) of the present invention includes first gripper fingers (240) and second gripper finger (250) each coupled to said first and second gripper assemblies (220, 230) and configured for simultaneous gripping and handling of objects (260) located at uncommon spaces, angles and orientations along said orthogonal planes (X, Y, Z). The first gripper fingers (240) and second gripper finger (250) pick and places objects (260) from two different locations, and the objects (260) are placed at different orientations and at two different angles in two different perpendicular planes. The servo motor (204) driven dual / plurality of gripper assemblies (220, 230) of the present invention are configured to perform synchronized and coordinated gripping action with high precision with the aid of gripper fingers (240, 250) of the gripper unit (235).

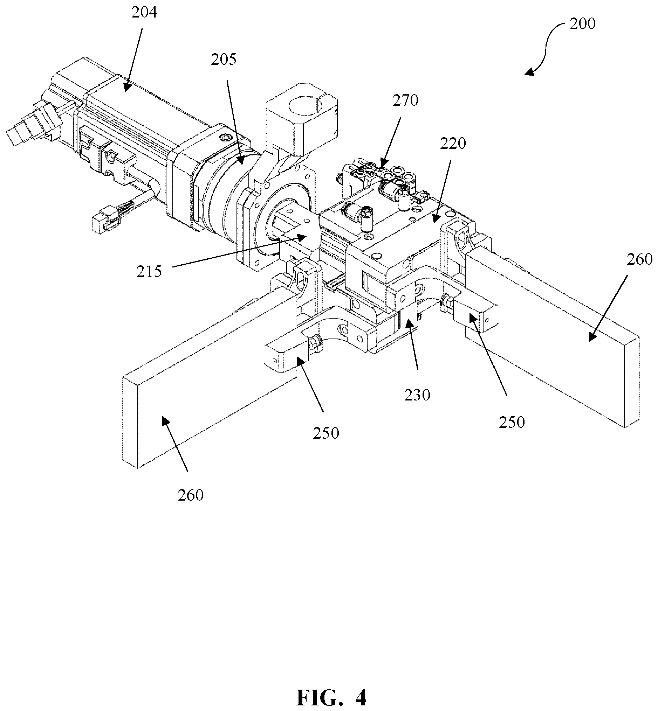

FIG. 4 according to the exemplary embodiment of the present invention illustrates the gripper system (200) with a gripper unit (235) coupled with a plurality of solenoid valves (270) configured for handling the objects (260). The plurality of solenoid valves (270) may be interconnected to a pneumatic supply device. The gripper fingers (240, 250) of the gripper unit (235) are configured to handle objects (260) that include for example but are not limited to banknotes. The pneumatic supply device is coupled with a first set of gripper fingers (240) and a second set of gripper fingers (250). The pneumatic supply device along with solenoid valves are configured to rotate the gripper assemblies (220, 230) and the first and second set of gripper finger (240, 250) angularly that aids in gripping action of the objects (260). The powerful pneumatic operated angular gripper assemblies (220, 230) are configured to grip the objects (260).

According to the exemplary embodiment, the gripper system (200) and the gripper unit (235) may be manufactured by simple processes such as general CNC machining and is economical as no special tools and techniques are required. The gripper system (200) with the gripper unit (235) is configured to handle banknotes or soft materials with significant thickness, particularly unpackaged banknotes.

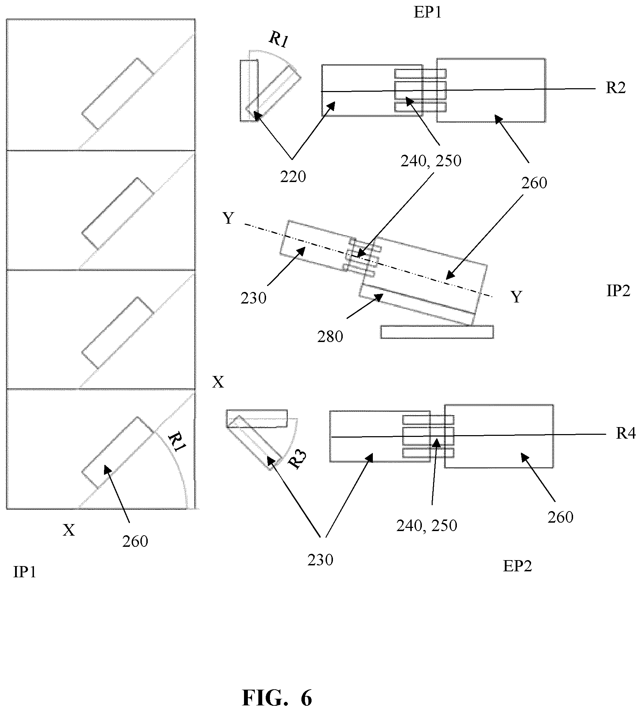

Referring to FIG. 6, illustrates the block diagram showing details angles of rotation of the plurality of gripper assemblies while handling the objects (260). It may be seen that both the gripper assemblies (220, 230) are individually in synchronized manner controlled by the servo motor (204) such that working with both the planes in separate motion along the common central rotational shaft axis (X-X) is made possible having the first gripper assembly (220) with a rotational degree of freedom with pre-defined angles varying from 0° to 45° and 45° to 0° and the second gripper assembly (230) has rotational degrees of freedom with pre-defined angles varying from 0° to 15° and 15° to 0° to pick and place the object (260). Accordingly, in the present invention, the first object (260) is located at a 45° (R1) inclined angle along an X-plane and an aligner (280) at the time placing the first object is at 15° along a Y-plane. The gripper system (200) is configured to make two different rotary motions of the gripper assemblies (220, 230) in perpendicular position using a single controlled and synchronized servo-driven motion drive for achieving efficient and precise handling of objects. According to the exemplary implementation of the gripper system (200), the first gripper assembly (220) in an initial movement position (IP1) is configured to rotate in positive rotation of 45° and translate towards the first object at first space in a first orientation located at a 45° inclined angle along an X-plane. At the same time, the second gripper assembly is configured to rotate in a first positive degree of freedom 15° along a Y-plane and translate along with the first gripper assembly towards the first object (260). When the gripper unit (235) of the first gripper assembly (220) having fingers (240, 250) is configured to pick and hold the first object (260), the first gripper assembly is configured to be translated away from the X-plane and move towards an aligner system (280). Now, according to gripper system (200), at the same instance the second gripper assembly (230) is also configured to be in an initial movement position (IP2) at second space in a second orientation 15° along a Y-plane and configured to pick and hold second objects (260). Now, once the second perpendicular gripper assembly (230) picks and holds the second object (260) from the second space, both the first and second gripper assemblies (220, 230) are configured to rotate in a negative degree of freedom respectively to end movement positions (EP1, EP2) to 90° relative to X-plane (R2) from the pre-defined 45° inclined angle (R1) and 0° relative to Y-plane (R4) from the pre-defined 15° inclined angle (R3). Then, the second gripper assembly is further configured to place the picked up second objects (260) in a third space along a negative Y-plane, the gripper fingers (240, 250) are deactivated, and the second object (260) is dropped in the third space and the second gripper assembly is configured to return to positive Y-plane. At the same instance, the first gripper assembly (220) with first objects (260) is configured to translate from X-plane towards Y-plane to drop the objects within the second space and translate back to X-plane. This operation repeats until all objects are placed from first space towards second spaces and finally into third space all in different predefined orientations and angles.

Again, referring to FIG. 2 to FIG. 4, and FIG. 12, according to the first embodiment, illustrates a controller (350) in communication with the gripper assemblies (220, 230) and the gripper fingers (240, 250) of the gripper unit (235) and the solenoid valves (270). The controller (350) is configured to initiate synchronized translation and varying rotational degrees of freedom of the first and second gripper assemblies (220, 230) along orthogonal planes (X, Y, Z) along with gripping of the object using the gripper fingers (240, 250) by actuation of the solenoid valves (270). According to the exemplary embodiment, unlike conventional gripper system (110) with multiple control systems (150, 160, 170), the present invention discloses a single command or servo integrated common command gripper system (200) having controlled operated motion of the gripper assemblies (220, 230). The gripper assemblies (220, 230) are individually coupled to the servo motor (204) and the gear box (205) or centrally connected to a servo control system (350).

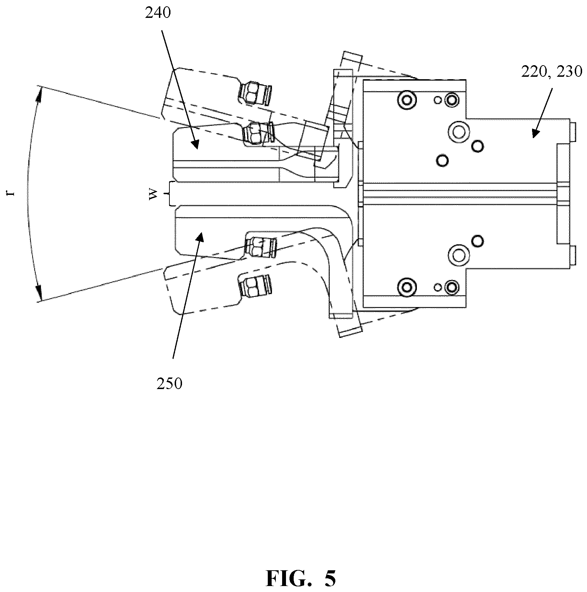

Referring to FIG. 5, which illustrates the gripper unit (235) according to a second embodiment of the present invention. The gripper unit (235) is coupled to a first and a second gripper assemblies (220, 230) and includes two parallel first gripper fingers (240) and a second gripper finger (250). The first gripper fingers (240) are two parallel fingers located at a first side of the gripper assemblies (220, 230) and the second set of gripper fingers (250) has a single finger located at a second side of the gripper assemblies (220, 230). The first and second set of gripper fingers (240, 250) are also equipped with special air nozzles to have control over the unfunctional behavior of the object (260) to be handled. The first and second gripper fingers (240, 250) are angled at least 15° each and are configured to have angular rotation (r) of at least 30° for forming a movable three-finger gripper. The air nozzles (275) are located on fingertips (276) of each of the gripper fingers (240, 250) and are in communication with said pneumatic supply device for providing additional support and friction while handling the objects (260).

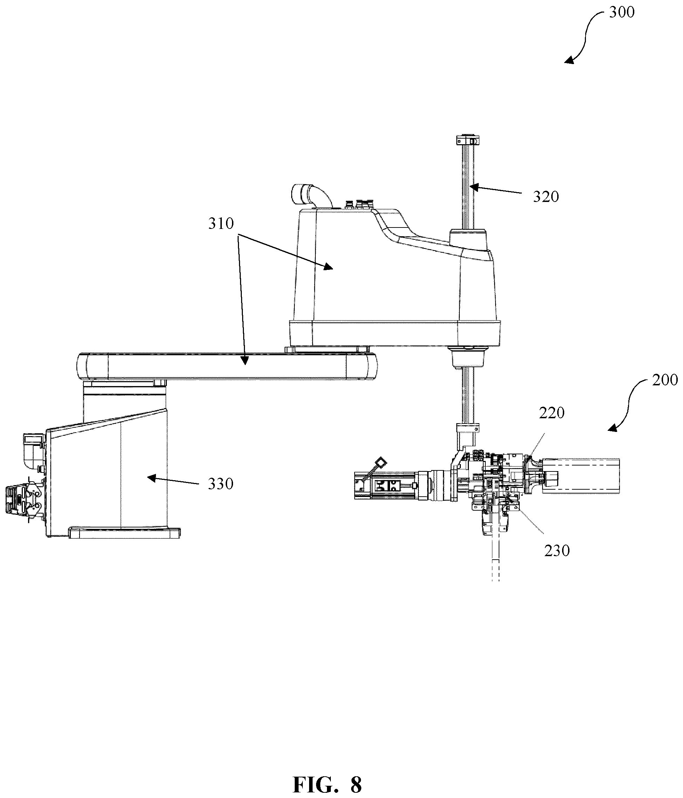

FIG. 8 illustrates a side view of the robot (300) with the gripper system (200) according to a third embodiment of the present invention. Accordingly, the robot (300) is configured to make it feasible for translation and rotation of the objects gripped by the gripping system (200) using robots (300) fourth axis.

Referring Figures 4, 8 and 12, according to the embodiment of the present invention, illustrates the servo control system (350) incorporated with a centralized control system to read data from a bank processing system and assigns the robot (300) accordingly to handle the objects (260). The servo control system (350) synchronizes multiple tasks associated with robot controller (340) to translate arms of the robot (300) and synchronize movement and rotation of the gripper system (200) within a time. Furthermore, the servo control system (350) in communication with gripper system (200) includes various sensors to obtain proper feedback of physical position of gripper system (200) and the physical presence of objects (260) in various process of handling objects. The gripper system (200) is coupled to the robot (300) which is a SCARA Robot and is well integrated between robot controller and servo control system (350) through a PLC. Individual solenoid valves are responsible for pneumatic functions and is programmed in PLC program.

Referring to FIG. 8 to FIG. 11, according to the embodiment of the present invention, illustrates the gripper system (200) with common rotational axis meets requirement in order to achieve the robot's higher payload range and high range of inertia. The first and second gripper assemblies (220, 230) are aligned with respect to two different planes, which intersect with each other by an orthogonal angle. Each of the first and second set of gripper fingers (240, 250) of the first and second gripper assemblies (220, 230) may each rotate with an angle of 15 degree such that all the gripping fingers are movable, and is formed by three-finger gripper, in which two fingers are arranged at the same side and the other finer is arranged at the opposite side. The space between the two gripping fingers of first set (240) is shorter than the width of the second gripping finger of the second set (250). The fingertips of the gripper finger may be equipped with air nozzle, or other configurations that provide additional support while holding banknotes for increasing friction or providing protection to the objects. The robot arm (310) has freedom of movement in at least 3 dimensions (self-rotation axis, self-extension axis, 2-joint arm movement). The gripping fingers are configured for separate movement control of all fingers by the first and second gripper assemblies (220, 230) in communication with servo control (204) and servo control system (350) The first and second gripper assemblies (220, 230) and the robot arm are controlled together using common communication protocol by servo control system (350) or they may be independently controlled by a different controller integrated on the same control interface by servo control system (350). The object (260) may be stacks of planar pieces. The first and second gripper assemblies (220, 230) are positioned respectively on two intersecting planes (preferably orthogonal) and are rotatable within a predefined range of degrees (R1, R2, R3, R4). The first fingers (240) are positioned at the same side by a gap smaller than the width of the first fingers (240) and the second finger (250) is center aligned with the gap of the first fingers (240).

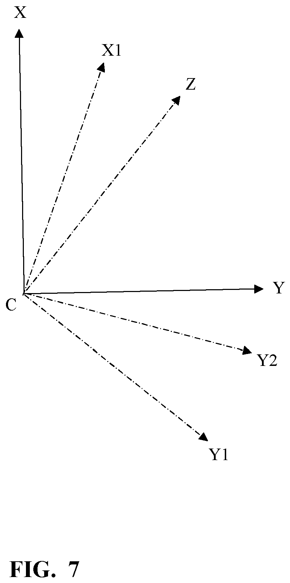

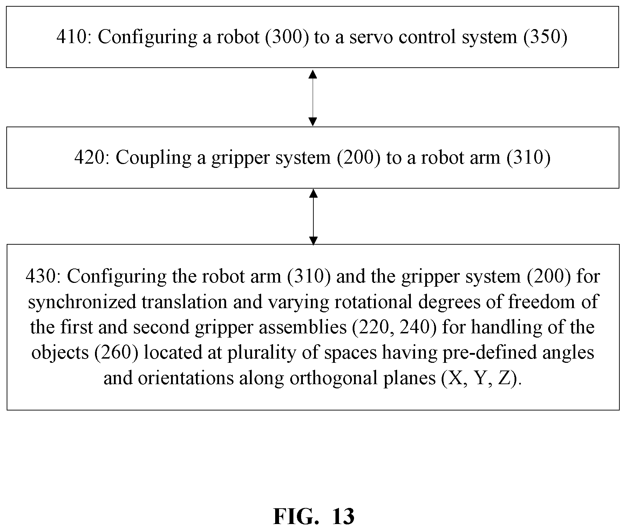

Referring FIG. 7 and FIG. 13, the present invention according to another exemplary aspect discloses a method (400) of handling objects comprising the steps of: (410) configuring a robot (300) in communication with a centralized servo control system (350); (420) coupling a gripper system (200) to an arm (310) of the robot (300); and (430) configuring the robot arm (310) and the gripper system (200) for synchronized translation and varying rotational degrees of freedom of the first and second gripper assemblies (220, 240) for handling of the objects (260) located at plurality of spaces having pre-defined angles and orientations along orthogonal planes (X, Y, Z). Referring FIG. 7, the step (430) of configuring robot arm (310) and gripper system (200) comprises rotating mutually perpendicular gripper assemblies (220, 230) of the gripper system (200) located in orthogonal planes individually or in synchronization, rotating a first gripper assembly (220) from CX plane to CZ plane 45° with a predefined angle (r) 30° between two gripper fingers wide open and simultaneously rotating second gripper assembly (230) from CY plane to CY1 plane 15° with an angle (r) 30° between two gripper fingers wide open. In this step (430), the robot (300) is configured to rotate gripper assembly (220) to 45° to pick up first objects (260) such as bank notes located at a first space. The second gripper assembly (230) stays down in 15° till object is collected. The method includes the step of configuring the second gripper assembly (230) to rotate 15° (CY2) with an angle (r) between two gripper fingers wide closed to collect the second object (260) such as bank notes. Simultaneously, the first gripper assembly (220) is configured to rotate 15° (CX1) with an angle (r) between two gripper fingers wide closed and collected first object (260). The method includes the further step of both the first and second gripper assemblies (220, 230) rotating (CX, CY) further to align straight and parallel to an aligner base (280). The first gripper and second gripper may rotate perpendicularly along the axis (X-X) along different planes and finally drop the collected objects.

There have been described and illustrated herein several embodiments of exemplary indicative implementation of a gripper system (200), a gripper unit (235) and a robot (300) for handling objects. It will also be apparent to a skilled person that the embodiments described above are specific examples of a single broader invention, which may have greater scope than any of the singular descriptions taught. There may be many alterations made in the description without departing from the scope of the invention. While embodiments of the invention have been described, it is not intended that the invention be limited to said configuration disclosed thereto, as it is intended that the invention be as broad in scope as the art will allow and that the specification be read likewise not restrictive to the terminology described herein above. Any discussion of embodiments included in this specification is solely for the purpose of providing a context for the disclosure. It is not to be taken as an admission that any or all these matters form a part of the prior art base or were common general knowledge in the field relevant to the disclosure as it existed anywhere before the priority date of this application.

## Claims

1. A gripper system (200) for handling objects (260), said gripper system (200) **characterized by** comprising:
a servomotor (204) coupled with a gear box (205);
a shaft (208) circumscribed within the gear box (205), extending along a central rotational shaft axis (X-X);
a first gripper assembly (220) mounted on said shaft (208) along said central rotational shaft axis (X-X);
a second gripper assembly (230) mounted on said shaft (208) perpendicular to said first gripper assembly (220) along said central rotational shaft axis (X-X);
a gripper unit (235) mounted on each of said first and second gripper assemblies (220, 230), said gripper unit (235) having two first gripper fingers (240) and a single second gripper finger (250) for gripping the object (260); and
a controller (350) in communication with the gripper unit (235), configured for synchronized translation and varying rotational degrees of freedom of the first and second gripper assemblies (220, 230) for handling of the objects (260) located at plurality of spaces having pre-defined angles and orientations along orthogonal planes (X, Y, Z).

2. The gripper system (200) as claimed in claim 1, wherein the gripper assemblies (220, 230) and the gripper unit (235) are individually coupled to the servo motor (204) and the gear box (205) or centrally connected to a servo control system (350).

3. The gripper system (200) as claimed in claim 1 or 2, wherein said the gripper assemblies (220, 230) and said gripper unit (235) are coupled with a plurality of solenoid valves (270) interconnected to said controller (350) and a pneumatic supply device.

4. The gripper system (200) as claimed in anyone of preceding claims 1-3, wherein the first gripper assembly (220) has rotational degrees of freedom with said pre-defined angles varying from 0° to 45° and 45° to 0°.

5. The gripper system (200) as claimed in anyone of preceding claims 1-4, wherein the second gripper assembly (220) has rotational degrees of freedom with said pre-defined angles varying from 0° to 15° and 15° to 0°.

6. The gripper system (200) as claimed in anyone of preceding claims 1-5, wherein the gripper assemblies (220, 230) are coupled to each other and mounted on the shaft (208) via a gripper assembly holder (215).

7. A gripper unit (235) for gripping objects (260), said gripper unit (235) **characterized by** comprising:
two first gripper fingers (240) spaced apart to each other and coupled to a first side of a gripper assembly (220, 230); and
a single second gripper finger (250) coupled to a second side of said gripper assembly (220, 230), said second gripper finger (250) is centrally aligned within a gap between the spaced apart first gripper fingers (240) for gripping, thereby handling of the objects (260) located at plurality of spaces having pre-defined angles and orientations along orthogonal planes (X, Y, Z).

8. The gripper unit (235) as claimed in claim 7, wherein the first and second gripper fingers (240, 250) are angled at least 15° each and are configured to have angular rotation (r) of at least 30°.

9. The gripper unit (235) as claimed in claim 7 or 8, wherein the first and second gripper fingers (240, 250) include air nozzles (275) on fingertips (276) in communication with a pneumatic supply device for providing additional support and friction while handling the objects (260).

10. The gripper unit (235) as claimed in anyone of preceding claims 7-9, wherein width (w) of the gap between the spaced apart first gripper fingers (240) is shorter than width (W) of the second gripper finger (250).

11. A robot (300) for handling objects (260), said robot (300) **characterized by** comprising:
a gripper system (200) as claimed in anyone of the preceding claims 1-6 for handling of the objects (260) located at plurality of spaces having pre-defined angles and orientations along orthogonal planes (X, Y, Z).

12. The robot (300) as claimed in claim **11,** wherein said robot (300) includes a robot arm (310) coupled to the gripper system (200), said robot arm (310) having a freedom of movement in at least a self-rotation axis, or a self-extension axis, or a two-joint arm movement or a combination thereof.

13. The robot (300) as claimed in claim **11** or 12, wherein said robot (300) includes an integrated servo control system (350) in communication with the gripper system (200) and the robot arm (310).

14. The robot (300) as claimed in anyone of preceding claims 11-13, wherein the robot arm (310) is interconnected with said gripper system (200) via a robot shaft holder (214) coupled to an extending block (212) of said gripper system (200).
